# NEUE EUROPÄISCHE PATENTSCHRIFT

(11) **EP 3 441 243 B2**
(45) Veröffentlichungstag und Bekanntmachung des Hinweises auf die Entscheidung über den Einspruch: **09.08.2023**
(45) Hinweis auf die Patenterteilung: 01.07.2020
(21) Anmeldenummer: 18187661.6
(22) Anmeldetag: 07.08.2018
(51) Int. Cl.: B60D 1/54, B60D 1/62, B60D 1/06

(54) **MOTORISCH VERSCHWENKBARE ANHÄNGEKUPPLUNG**
MOTOR-DRIVEN PIVOTABLE TRAILER COUPLING
ATTELAGE DE REMORQUE POUVANT PIVOTER DE MANIÈRE MOTORISÉE

(30) Priorität: 09.08.2017 DE 102017118152
(43) Veröffentlichungstag der Anmeldung: 13.02.2019
(73) Patentinhaber: FAC Frank Abels Consulting & Technology GmbH, 29633 Munster (DE)
(72) Erfinder: von Alm, Günter, 29614 Soltau (DE); Fidomski, Marcus, 29614 Soltau (DE); Abels, Frank, 29633 Münster (DE)
(74) Vertreter: Feder Walter Ebert

(56) Entgegenhaltungen:
- EP-A1- 1 380 445
- EP-A1- 1 407 901
- EP-A1- 1 488 943
- EP-A1- 1 491 369
- EP-A1- 1 491 369
- EP-A1- 1 504 928
- EP-A1- 1 541 385
- EP-A1- 1 561 610
- EP-A1- 1 584 499
- EP-A1- 1 584 500
- EP-A1- 1 586 471
- EP-A1- 1 790 504
- EP-A1- 2 233 326
- EP-A2- 1 142 732
- WO-A1-98/57813
- DE-A1- 10 017 013
- DE-A1- 10 104 185
- DE-A1- 19 858 978
- DE-A1-102004 045 869
- DE-A1-102004 051 976
- DE-A1-102004 051 976
- DE-B4-102006 033 031
- DE-U1-202015 104 504

## Beschreibung

Die vorliegende Erfindung betrifft eine Anhängekupplung für Fahrzeuge mit einem beweglichen Kupplungsarm gemäß dem Oberbegriff des Patentanspruchs 1.

In der EP 1 142 732 A2 ist eine Anhängerkupplung beschrieben mit einem fahrzeugfest angeordneten Schwenklagerkörper, an welchem ein Schwenkelement um eine Schwenkachse schwenkbar gelagert ist, einen sich ausgehend von dem Schwenkelement erstreckenden Kugelhals, der an seinem dem Schwenkelement abgewandten Ende eine Kupplungskugel trägt und eine Verriegelungsvorrichtung zur formschlüssigen Festlegung des Schwenkelements gegenüber dem Schwenklagerkörper.

In der DE 10 2004 045 869 A1 ist eine Anhängerkupplung für Fahrzeuge mit einer Kugelstange offenbart, wobei ein Schwenkantrieb eine Kurvensteuerung mit einem Leitkurvenkörper und einem Schwenkkurvenkörper aufweist, deren Kurvenflächen derart zusammenwirken, dass die Kugelstange mit ihrem freien Ende auf einer vorgegebenen Kurve zwischen ihrer Betriebsstellung und ihrer Ruhestellung verschwenkbar ist. Weiterhin sind zwei Bolzen vorgesehen, die die Kugelstange in einer Arbeitsstellung sichern.

Die DE 198 58 978 A1 offenbart eine Anhängerkupplung für Kraftfahrzeuge, wobei eine Kugelstange in einer Arbeitsstellung über eine Vorspannvorrichtung festgelegt ist.

Derartige motorisch verschwenkbare Anhängekupplungen sind an sich bekannt und werden eingesetzt, um Teile einer an einem Fahrzeug montierten Anhängekupplung bei Nichtgebrauch in eine gegen Sicht verdeckte Position zu bewegen, indem beispielsweise der Kupplungsarm gegenüber der Fahrzeugkarosserie oder anderen Fahrzeugteilen bewegt wird und in der Ruheposition, welche die gegen Sicht verdeckte Position darstellt, entsprechend hinter Fahrzeugteilen oder Karosserieteilen des Fahrzeugs, wie beispielsweise einem Stoßfänger oder einer Heckstoßstange, angeordnet ist.

Bei den Anhängekupplungen aus dem Stand der Technik ist zudem bekannt, dass in der Arbeitsstellung des Kupplungsarms, also in einer Stellung des Kupplungsarms, in der eine Ankupplung oder Verbindung mit Lasten, wie beispielsweise einem Anhänger, einem Zweiradträger oder dergleichen erfolgen kann und vorgesehen ist, der Antrieb, der zur Überführung des Kupplungsarms zwischen der Arbeitsstellung und der Ruhestellung eingesetzt wird, den Verbleib des Kupplungsarms in der Arbeitsstellung sicherstellt.

Denn bei Kraft- oder Impulseinwirkungen auf dem Kupplungsarm, beispielsweise durch Beschleunigung, Kurvenfahrt oder Verzögern mit einem Gespann aus einem Fahrzeug und einem Anhänger, kann eine Bewegung des Kupplungsarms resultieren, sodass der Kupplungsarm lose wird und die Arbeitsstellung zumindest teilweise aufgehoben oder gelöst wird.

Dem wird im Stand der Technik dadurch begegnet, dass der Antrieb zur Überführung zwischen der Arbeitsstellung und der Ruhestellung des Kupplungsarms in gewissen Abständen angesteuert wird, um den zumindest teilweise aus der Arbeitsstellung losgelösten oder losgeschlagenen Kupplungsarm wieder in die Arbeitsteilung zu überführen. Bei dieser wiederholten Ansteuerung des Antriebs zur Aufrechterhaltung der Arbeitsstellung des Kupplungsarms wird in der Regel von einem Nachtakten des Antriebs gesprochen.

Diese bekannte Vorgehensweise hat jedoch den Nachteil, dass sowohl der Antrieb als auch die mit dem Antrieb verbundenen Bestandteile der Anhängekupplung einer erhöhten Beanspruchung und damit einem erhöhten Verschleiß ausgesetzt sind.

Vor diesem Hintergrund ist es die Aufgabe der vorliegenden Erfindung, eine Anhängekupplung für Fahrzeuge mit einem beweglichen Kupplungsarm, der mit zumindest einem Antrieb zwischen einer Arbeitsstellung und einer Ruhestellung bewegbar ist, anzugeben, die die Nachteile des Stands der Technik überwindet, insbesondere ein Nachtakten des Antriebs zur Aufrechterhaltung der die Arbeitsstellung reduziert oder vollständig vermeidet.

Diese **Aufgabe** wird bei einer Anhängekupplung der eingangs genannten Art durch die Merkmale des Patentanspruchs 1 **gelöst**.

Dadurch wird in besonders vorteilhafter Art und Weise erreicht, dass das Arretierelement einerseits die Arretierung in der Arbeitsstellung des Kupplungsarms ermöglicht und gleichzeitig die Krafteinleitung in zumindest einen Antrieb zumindest reduziert, soweit Krafteinwirkungen auf den Kupplungsarm in der Arbeitsstellung auftreten. Dadurch wird das Nachtakten des zumindest einen Antriebs zumindest deutlich reduziert, da das Arretierelement den Kupplungsarm in der Arbeitsstellung hält oder in die Arbeitsstellung beaufschlagt und gleichzeitig die Krafteinleitung in zumindest einen Antrieb zumindest reduziert und dadurch ein Lösen oder Losschlagen des Kupplungsarms, welches mit einem Nachtakten des zumindest einen Antriebs kompensiert werden müsste, verhindert. Das Arretierelement leitet gemäß der Erfindung zumindest einen Teil der über den Kupplungsarm in die Vorrichtung eingetragenen Kräfte ab und vermindert damit die Krafteinleitung auf den zumindest einen Antrieb.

Gemäß einer ersten vorteilhaften Ausführungsform der Anhängekupplung kann vorgesehen sein, dass das Arretierelement den Kupplungsarm derart in der Arbeitsstellung hält, dass bei Krafteinwirkungen auf den Kupplungsarm in der Arbeitsstellung zumindest ein Antrieb kraftfrei gehalten wird. Dadurch wird ermöglicht, dass das Arretierelement die Kraftübertragung zwischen dem Kupplungsarm einerseits und dem zumindest einen Antrieb andererseits unterbricht. Außerdem hält das Arretierelement, trotz der unterbrochenen Kraftübertragung zwischen dem zumindest einen Antrieb und dem Kupplungsarm, den Kupplungsarm in der Arbeitsstellung. Dies kann beispielsweise dadurch gewährleistet werden, dass das Arretierelement die Kräfte, die bei einer Krafteinwirkung auf den Kupplungsarm entstehen und dazu geeignet sind, den Kupplungsarm aus der Arbeitsstellung zu lösen oder die Arretierung des Kupplungsarms in der Arbeitsstellung zu vermindern aufnimmt und so in die Struktur der Anhängekupplung überführt oder abgeleitet werden, dass eine Krafteinwirkung auf zumindest einen Antrieb unterbleibt. Damit wirkt das Arretierelement zusätzlich zur Sicherung der Arbeitsstellung des Kupplungsarms als "Kraftumleitung" oder "Kräftebeipass", der dafür sorgt, dass die Arretierung des Kupplungsarms in der Arbeitsstellung aufrechterhalten wird, ohne dass dazu ein Nachtakten von dem zumindest einem Antrieb nötig wird.

Erfindungsgemäß ist vorgesehen, dass das Arretierelement als Teil einer von einem Antrieb angetriebenen Stellmechanik ausgebildet ist. Damit wird das Arretierelement als dynamisches oder bewegliches Element der Anhängekupplung ausgestaltet. Dies bedeutet, dass das Arretierelement bei der Überführung des Kupplungsarms zwischen der Arbeitsstelle und der Ruhestellung vollständig oder als ganzes und zusammen mit anderen Bestandteilen der Stellmechanik gegenüber der Anhängekupplung bewegt wird. Das Arretierelement ist in dieser Ausführungsform nicht fest in der Anhängekupplung, insbesondere einem Gehäuseteil, angelenkt, sondern zusammen mit der Stellmechanik bewegbar.

Durch die Ausbildung des Arretierelements als Teil der Stellmechanik wird die erfindungsgemäße Anhängekupplung in vorteilhafter Weise kompakter ausgeführt. Denn eine von zumindest einem Antrieb angetriebene Stellmechanik zur Überführung des Kupplungsarms zwischen der Arbeitsstellung und der Ruhestellung ist bei einer gattungsgemäßen Anhängekupplung zwangsläufig vorgesehen. Bei einer Integrierung des Arretierelements in eine solche Stellmechanik oder bei der Ausbildung des Arretierelements als Teil einer solchen Stellmechanik kann in vorteilhafter Weise ein separates Arretierelement zusätzlich zur angetriebenen Stellmechanik eingespart werden. Dadurch benötigt die erfindungsgemäße Anhängekupplung einen geringen Bauraum und könnte zudem günstiger hergestellt werden.

Gemäß einer ebenfalls vorteilhaften Ausgestaltung kann vorgesehen sein, dass das Arretierelement in einer Freigabestellung zur Kraftübertragung zwischen zumindest einem Antrieb und dem Kupplungsarm eingerichtet ist. Eine derartige Kraftübertragung kann insbesondere dadurch erreicht werden, dass das Arretierelement als Teil einer angetriebenen Stellmechanik ausgebildet wird. Bei der Freigabestellung des Arretierelements muss es sich jedoch nicht um eine einzige Position und/oder Ausrichtung des Arretierelements gegenüber dem Kupplungsarm oder gegenüber der Anhängekupplung handeln. Vielmehr kann, insbesondere bei einer Ausbildung des Arretierelements als dynamisches Teil einer angetriebenen Stellmechanik, vorgesehen sein, dass jede Stellung des Arretierelements abseits der Stellung, die den Kupplungsarm in der Arbeitsstellung arretiert, von einer Freigabestellung des Arretierelements ausgegangen werden.

Eine weitere vorteilhafte Ausführungsform der Anhängekupplung sieht vor, dass das Arretierelement zumindest eine Gelenkaufnahme aufweist. Dadurch kann unter anderem erreicht werden, dass das Arretierelement durch eine Dreh- und/oder Kippbewegung um ein entsprechendes Gelenk in die Arretierstellung überführt wird, in der das Arretierelement den Kupplungsarm in der Arbeitsstellung arretiert. Dies hat den Vorteil, dass je nach Ausbildung des Gelenks und des Arretierelements bei der Arretierung des Kupplungsarms sowie bei der Überführung des Arretierelements in eine Freigabestellung weitestgehend frei wählbare Hebel und Drehmomente zum Einsatz kommen können, so dass mit vergleichsweise geringen aufzubringenden Kräften und einem entsprechenden gewählten und durch das Arretierelement ausgebildeten Hebelarm eine sichere und stabile Arretierung des Kupplungsarms sowie umgekehrt eine leichte und sichere Erreichung der Arretierstellung und der Freigabestellung des Arretierelements erreicht wird. Gleichermaßen sicher und einfach kann dadurch die Aufhebung der Arretierung des Kupplungsarms in der Arbeitsstellung ermöglicht werden.

In einer erfindungsgemäßen Ausgestaltung der Anhängekupplung ist vorgesehen, dass das Arretierelement an einem ersten Ende über ein Gelenk mit einem Drehlagerteil des Kupplungsarms verbunden ist. Derartige Drehlagerteile kommen bei gattungsgemäßen Anhängekupplungen zum Einsatz, um eine Überlagerung verschiedener Bewegungen des Kupplungsarms bei der Überführung zwischen der Ruhestellung und der Arbeitsstellung erreichen zu können. Insbesondere ermöglichen solche Drehlagerteile zumindest auch die Rotation des Kupplungsarms um eine Rotationsachse. Der Kupplungsarm kann dazu einen Aufnahmeabschnitt aufweisen, der an einer Lagerfläche des Drehlagerteils drehbar gelagert ist. Die Verbindung des Arretierelements an einem ersten Ende mit einem entsprechenden Drehlagerteil über ein Gelenk sorgt in vorteilhafter Weise für eine sichere Arretierung des Kupplungsarms in der Arbeitsstellung. Gleichzeitig ermöglicht eine derartige Verbindung zwischen Drehlagerteil und Arretierelement die Einbindung des Arretierelements in eine Stellmechanik. Die Verbindung kann beispielsweise über die oben bereits beschriebene Gelenkaufnahme des Arretierelements einerseits und einem vom Drehlagerteil ausgebildeten Gelenk andererseits, beispielsweise in Form eines Gelenkbolzens, erreicht werden.

Wie oben bereits angedeutet, kann über die Nutzung entsprechender Hebelmomente eine einfache und sichere Überführung des Arretierelements zwischen einer Arretierstellung und einer Freigabestellung bewerkstelligt werden. Dementsprechend sieht eine erfindungsgemäße Ausgestaltung der Anhängekupplung vor, dass das Arretierelement über eine Drehung gegenüber dem Drehlagerteil zwischen einer Arretierstellung und einer Freigabestellung bewegbar ist.

Zudem ist erfindungsgemäß vorgesehen, dass das Arretierelement in der Arretierstellung an einem Stützanschlag zur Anlage kommt. Besonders vorteilhaft ist, wenn das Arretierelement mit einem zweiten Ende des Arretierelements an einem Stützanschlag zu Anlage kommt. Da sich die Arretierstellung des Arretierelements auch dadurch auszeichnet, dass in der Arretierstellung des Arretierelements der Kupplungsarm in der Arbeitsstellung gehalten wird, kann die vorteilhafte Ausführungsform auch so verstanden werden, dass das Arretierelement so ausgestaltet ist, dass es, insbesondere mit einem zweiten Ende an einem Stützanschlag zur Anlage kommt, wenn das Arretierelement den Kupplungsarm in der Arbeitsstellung hält.

Dabei kann beispielsweise vorgesehen sein, dass der Stützanschlag in einem Gehäuseteil der Anhängekupplung ausgebildet ist und so mit dem Gehäuseteil verbunden ist, dass in der Arretierstellung des Arretierelements eine Krafteinleitung auf den Kupplungsarm über das Arretierelement und den Stützanschlag in das Gehäuseteil der Anhängekupplung abgeleitet wird, wobei der zumindest eine Antrieb zumindest entlastet oder vollständig kraftfrei gehalten wird. In der Arretierstellung kann zwischen dem Stützanschlag und dem Arretierelement ein Kraftschluss oder Reibschluss vorliegen. Dabei ist vorteilhaft vorgesehen, dass das Arretierelement, insbesondere das zweite Ende des Arretierelements, und der Stützschlag so ausgestaltet sind und in der Arretierstellung so zueinander ausgerichtet sind, dass eine Krafteinwirkung auf den Kupplungsarm den Kraftschluss zwischen Stützanschlag und Arretierelement erhöht oder zumindest unverändert lässt. Dadurch wird eine Selbsthemmung des Arretierelements erreicht, die dafür sorgt, dass das Arretierelement, insbesondere bei Krafteinwirkungen auf den Kupplungsarm in der Arbeitsstellung des Kupplungsarms, die Arretierstellung nicht verlässt, sondern vielmehr weiter in die Arretierstellung beaufschlagt wird.

Besonders vorteilhaft kann zudem vorgesehen sein, dass das Arretierelement an einem zweiten Ende eine asymmetrische Form, insbesondere eine asymmetrische Abrundung, aufweist. Die asymmetrische Form kann beispielsweise durch eine gegenüber einer Längssymmetrieachse des Arretierelements exzentrisch angeordnete Kreis-Abrundung ausgeführt sein. Dadurch kann erreicht werden, dass die Verspannkraft zwischen Arretierelement und einem Stützanschlag in der Arretierstellung des Arretierelements vergrößert und darüber hinaus ein Ausgleich für Verschleiß und Toleranzen gebildet wird. Soweit nicht das zweite Ende, sondern ein anderer Teil des Arretierelements mit einem Stützanschlag oder einem gleichwirkenden Vorrichtungsteil zur Anlage kommt, kann auch derjenige Teil des Arretierelements die asymmetrische Form, insbesondere die asymmetrische Abrundung, aufweisen.

In einer weiteren, besonders vorteilhaften Ausgestaltung der Anhängekupplung kann vorgesehen sein, dass die Anhängekupplung zumindest ein Führungsmittel zur Führung des Arretierelements, insbesondere des zweiten Endes des Arretierelements, in der Freigabestellung des Arretierelements oder außerhalb der Arretierstellung des Arretierelements umfasst. Durch das zumindest eine Führungsmittel kann sichergestellt werden, dass das Arretierelement in der Freigabestellung bei der Überführung zwischen der Ruhestellung und der Arbeitsstellung geführt wird, was bedeutet, dass ungewollte Bewegungen des Arretierelements, wie beispielsweise ein ungewolltes Verdrehen, Verkippen oder Querstellen des Arretierelements in der Freigabestellung verhindert wird.

Besonders vorteilhaft kann vorgesehen sein, dass ein Ende des zumindest einen Führungsmittels einen Stützanschlag ausbildet, in dem das Arretierelement in der Arretierstellung zur Anlage kommt. Zumindest ein Führungselement zur Führung des Arretierelements ist insbesondere dann besonders vorteilhaft, wenn das Arretierelement gleichzeitig Teil einer Stellmechanik ist und/oder in der Freigabestellung zur Kraftübertragung zwischen zumindest einem Antrieb und dem Kupplungsarm eingerichtet ist.

Weiterhin kann besonders vorteilhaft vorgesehen werden, dass das Arretierelement als ein Arm eines Dreifachgelenks ausgebildet ist. Das Vorsehen eines Dreifachgelenks oder eines Gelenkarms mit drei Gelenken unter Einbeziehung des Arretierelements bringt den Vorteil mit sich, dass das Arretierelement einerseits als Teil der Stellmechanik ausgebildet sein kann und dass darüber hinaus weitere Arme des Dreifachgelenks einerseits ebenfalls als Teil der Stellmechanik ausgebildet sein können und andererseits als Antriebshebel für das Arretierelement dienen können, um das Arretierelement nicht nur, aber auch zwischen der Freigabestellung und der Arretierstellung zu bewegen, insbesondere zu verdrehen. Der entsprechende Gelenkarm oder das Dreifachgelenk kann also zwei Arme und drei Gelenke umfassen, wobei zumindest ein Arm durch das Arretierelement gebildet wird. Bevorzugt wird der zweite Arm von zumindest einem Antriebshebel gebildet.

Besonders vorteilhaft kann in diesem Zusammenhang vorgesehen sein, dass das Dreifachgelenk derart ausgestaltet ist, dass es in der Ruhestellung des Kupplungsarms eine maximale Streckung erfährt, wobei eine vollständige Streckung verhindert wird. Dies bedeutet, dass das Arretierelement und der zumindest eine Antriebshebel in jeder Position einen Winkel einschließen, der nicht gleich 180° ist. Dadurch wird in einer besonders vorteilhaften Art und Weise verhindert, dass das Dreifachgelenk bei der Überführung des Kupplungsarms zwischen der Arbeitsstellung und der Ruhestellung in eine Totpunktposition überführt wird.

Ebenfalls kann vorteilhaft vorgesehen sein, dass das Dreifachgelenk derart ausgebildet ist, dass es in der Arbeitsstellung des Kupplungsarms eine maximale Abwinklung erfährt. Dies sorgt besonders vorteilhaft für eine einfache und sichere Herstellung der Arretierstellung des Arretierelements und gleichermaßen für eine sichere und einfache Überführung des Arretierelements zwischen der Arretierstellung und der Freigabestellung.

Eine weitere, besonders bevorzugte Ausführungsform der Anhängekupplung sieht zumindest zwei Führungsmittel vor, welche bei der Überführung des Kupplungsarms zwischen Ruhestellung und Arbeitsstellung die Relativlage der Arme des Dreifachgelenks zueinander bestimmen oder begrenzen. Dazu können die Führungsmittel je eine Führungsfläche oder Führungsoberfläche ausbilden. Die Führungsflächen können einander zugewandt sein, so dass zwischen den Führungsflächen ein Führungskanal ausgebildet wird. An den Führungsflächen können das Arretierelement und/oder weitere Teile der Stellmechanik oder des Dreifachgelenks zur Anlage kommen und bei der Überführung des Kupplungsarms zwischen Ruhestellung und Arbeitsstellung entlanggleiten. Dadurch wird eine präzise und wiederholbare Bewegung zumindest des Arretierelements sichergestellt.

Gemäß einer weiteren, besonders vorteilhaften Ausführungsform der Anhängekupplung kann vorgesehen sein, dass ein Drehlagerteil des Kupplungsarms starr mit einem Kipparm verbunden ist. Dadurch wird vorteilhaft ermöglicht, dass das Drehlagerteil und damit auch der Kupplungsarm eine Kippbewegung ausführen kann, die mit anderen Bewegungen bei der Überführung des Kupplungsarms zwischen der Arbeitsstellung und der Ruhestellung überlagert werden kann.

In diesem Zusammenhang kann besonders vorteilhaft vorgesehen sein, dass der Kipparm an einem vom Drehlagerteil angewandten Ende starr mit einer Achse verbunden ist, die insbesondere über zumindest einen Achsvorsprung, in einer Kulisse geführt wird. Dies bedeutet, dass der Achsvorsprung als Kulissenstein dient, der dafür sorgt, dass die Achse in der oder durch die Kulisse geführt wird. Durch die Ausbildung einer Achse an dem von dem Drehlagerteil abgewandten Ende des Kipparms sowie durch die Führung der Achse in eine Kulisse, insbesondere über zumindest einen Achsvorsprung oder Kulissenstein, kann in besonders vorteilhafter Weise das Ausführen oder der Zeitpunkt für das Ausführen einer Kippbewegung des Drehlagerteils um eine Kippachse gesteuert werden.

Dazu kann beispielsweise vorgesehen sein, dass die Kulisse und der zumindest eine Achsvorsprung so zueinander ausgeführt sind, dass in einem gewissen Teil oder Abschnitt der Kulisse die mit dem Kipparm verbundene Achse freigegeben und damit zumindest um einen gewissen Winkel drehbar ist, wohingegen die Kulisse und der zumindest eine Achsvorsprung in anderen Abschnitten der Kulisse so zueinander abgestimmt sind, dass die Rotation der Achse verhindert wird. Dadurch kann die Verkippung des Drehlagerteils um den Kipparm in besonders vorteilhafter Weise ohne einen eigenen oder zusätzlichen Antrieb erfolgen, sondern als Resultat einer sonstigen von dem zumindest einen Antrieb bewirkten Bewegung des Kupplungsarms und insbesondere des Drehlagerteils des Kupplungsarms realisiert werden.

Demnach kann besonders bevorzugt vorgesehen sein, dass die Kulisse und insbesondere der Achsvorsprung derart ausgestaltet ist oder ausgestaltet sind, dass in der Arbeitsstellung des Kupplungsarms, insbesondere in der Arretierstellung des Arretierelements, eine Rotation der mit dem Kipparm verbundenen Achse verhindert wird. Dadurch wird auch sichergestellt, dass bei einer Krafteinwirkung auf den Kupplungsarm in der Arbeitsstellung des Kupplungsarms eine effektive Verringerung oder Verhinderung einer Krafteinleitung auf zumindest einen Antrieb der Anhängekupplung erfolgen kann.

Gemäß einer weiteren, besonders bevorzugten Ausführungsform der Anhängekupplung kann vorgesehen sein, dass die Kulisse einen Translationsabschnitt aufweist, der, insbesondere bezogen auf einen Achsvorsprung der Achse, derart ausgestaltet ist, dass bei der Überführung des Kupplungsarms aus der Arbeitsstellung und die Ruhestellung zunächst eine Verschiebung oder Translation der Achse entlang der Kulisse erfolgt. Dadurch kann auch erreicht werden, dass bei der Überführung des Kupplungsarms aus der Arbeitsstellung in die Ruhestellung zunächst eine Translation des Kupplungsarms herbeigeführt wird, die ggf. mit einer Rotation des Kupplungsarms überlagert werden kann.

Gemäß einer weiteren, bevorzugten Ausführungsform der Anhängekupplung kann vorgesehen sein, dass die Kulisse einen Rotationsabschnitt aufweist, der, insbesondere unter Berücksichtigung des zumindest einen Achsenvorsprungs, derart ausgestaltet ist, dass bei der Überführung des Kupplungsarms aus der Arbeitsstellung in die Ruhestellung zum Erreichen der Ruhestellung eine Rotation der Achse erfolgt. Dabei kann vorteilhaft vorgesehen sein, dass die Rotation der Achse im Rotationsabschnitt der Kulisse zu einer Verkippung des Kipparms und damit zu einer entsprechenden Verkippung des Drehlagerteils des Kupplungsarms und des Kupplungsarms führt. Eine derartige Bewegung zur Erreichung der Ruhestellung des Kupplungsarms hat den Vorteil, dass der Kupplungsarm in der Ruhestellung besonders platzsparend angeordnet werden kann und zudem besonders einfach in eine gegen Sicht verdeckte Position am Fahrzeug angeordnet werden kann.

Die vorangehend beschriebenen Ausgestaltungen der Kulisse und/oder des Achsenvorsprungs dienen gleichermaßen umgekehrt auch zur Überführung des Kupplungsarms aus der Ruhestellung in die Arbeitsstellung. Dabei kann zunächst eine Rotation oder Verkippung über den Rotationsabschnitt erfolgen, gefolgt von einer Translation entlang des Translationsabschnitts, wobei die Kulisse zudem so ausgeführt sein kann, dass in der Position, in der die Arbeitsstellung des Kupplungsarms erreicht wird, eine Rotation der Achse verhindert wird.

Eine weitere, besonders bevorzugte Ausführungsform der Anhängekupplung sieht vor, dass die Anhängekupplung ein Gehäuseteil aufweist, welches zumindest zur Aufnahme des Arretierelements dient. Weiter vorteilhaft kann vorgesehen sein, dass das Gehäuseteil die Stellmechanik und/oder das Drehlagerteil sowie ggf. Teile des Kupplungsarms aufnimmt. Dadurch können die entsprechenden Teile der Anhängekupplung besonders effektiv vor schädlichen Umwelteinflüssen geschützt werden.

Eine weitere, besonders vorteilhafte Ausgestaltung sieht vor, dass das Gehäuseteil zwei Seitenwände umfasst, in denen Kulissenöffnungen einer Kulisse angeordnet sind. Damit wird erreicht, dass die Seitenwände neben anderen Funktionen auch eine Funktion bei der Führung der Elemente der Anhängekupplung bei der Überführung des Kupplungsarms zwischen Ruhestellung und Arbeitsstellung ausüben.

Eine weitere, besonders vorteilhafthafte Ausgestaltung der Anhängekupplung sieht vor, dass das Gehäuseteil, insbesondere an einer ersten Stirnseite des Gehäuseteils, Einrichtungen zur zumindest teilweisen Aufnahme von zumindest einem Antrieb aufweisen. Dadurch kann gewährleistet werden, dass die mitunter empfindlichen Bestandteile des zumindest einen Antriebs gegenüber Umwelteinwirkungen geschützt werden. Außerdem kann dadurch eine sichere Anordnung des Antriebs gewährleistet werden. Weiter lässt sich dadurch eine kompakte Bauweise der Anhängekupplung erreichen.

In einer weiteren, besonders bevorzugten Ausgestaltung der Anhängekupplung kann vorgesehen sein, dass der Kupplungsarm Drehsicherungselemente aufweist, die mit komplementären Drehsicherungselementen in Eingriff bringbar sind und in der Arbeitsstellung des Kupplungsarms eine Rotation des Kupplungsarms verhindern. Die Drehsicherungselemente sind dabei so ausgestaltet, dass deren gegenseitiger Eingriff gerade dann vorliegt oder erreicht wird, wenn der Kupplungsarm in der Arbeitsstellung befindlich ist. Die Erreichung der Arbeitsstellung des Kupplungsarms führt also gleichzeitig zum Ineinandergreifen oder in Eingriff bringen der komplementären Drehsicherungselemente. Um die Rotation des Kupplungsarms in der Arbeitsstellung zu verhindern, kann vorteilhaft vorgesehen sein, dass die zu den Drehsicherungselementen des Kupplungsarms komplementären Drehsicherungselemente an einem Gehäuseteil der Anhängekupplung ortsfest und unbeweglich angeordnet sind.

Beispielsweise kann vorgesehen sein, dass an einer zweiten Stirnseite des Gehäuseteils Drehsicherungselemente angeordnet sind, die mit komplementären Drehsicherungselementen des Kupplungsarms in Eingriff bringbar sind und in der Arbeitsstellung des Kupplungsarms eine Rotation des Kupplungsarms gegenüber dem Gehäuseteil verhindern. In einer alternativen Ausgestaltungsform kann auch vorgesehen sein, dass die Drehsicherungselemente einerseits an dem Kupplungsarm vorgesehen und die entsprechend komplementären Drehsicherungselemente an einer anderen Position der Anhängekupplung angeordnet sind, so dass sie in der Arbeitsstellung des Kupplungsarms mit den Drehsicherungselementen des Kupplungsarms in Eingriff bringbar sind und eine Rotation des Kupplungsarms verhindern.

Das Arretierelement kann dabei so ausgestaltet sein, dass es in seiner Arretierstellung, also in der Arbeitsstellung des Kupplungsarms, die komplementären Drehsicherungselemente miteinander in Eingriff hält. Außerdem kann vorgesehen sein, dass das Arretierelement derart ausgestaltet ist, dass es beim Übergang in seine Freigabestellung den Eingriff der komplementären Drehsicherungselemente auflöst, aufhebt oder zumindest nicht weiter befördert.

Eine weitere, besonders vorteilhafte Ausgestaltung der Anhängekupplung sieht vor, dass die Anhängekupplung genau einen Antrieb zur Überführung des Kupplungsarms zwischen der Arbeitsstellung und der Ruhestellung aufweist. Dies bedeutet, dass die Anhängekupplung genau einen Antrieb aufweist und dass die verschiedenen Bewegungen oder Teilbewegungen des Kupplungsarms bei der Überführung zwischen Arbeitsstelle und Ruhestellung allesamt zumindest mittelbar auf den genau einen Antrieb zurückgehen. Dabei kann beispielsweise vorgesehen sein, dass der zumindest eine Antrieb als Linearantrieb ausgestaltet ist und demnach primär oder unmittelbar eine Translationsbewegung verursacht, wobei alle Bewegungen des Kupplungsarms und auch die sonstigen Bewegungen der Teile der Anhängekupplung bei der Überführung des Kupplungsarms zwischen Arbeitsstellung und Ruhestellung mittelbar auf die Translationsbewegung des Linearantriebs zurückgehen. Eine Ausführung der Anhängekupplung mit genau einem Antrieb hat den Vorteil, dass die Anhängekupplung dadurch kompakter und kostengünstiger hergestellt werden kann.

Besonders vorteilhaft kann dabei vorgesehen sein, dass der eine Antrieb bei der Überführung des Kupplungsarms zwischen der Arbeitsstellung und der Ruhestellung eine Translation und eine Drehung des Drehlagerteils sowie eine Rotation des Kupplungsarms bewirkt. Wie bereits erwähnt, können die Bewegungen auch mittelbar von dem Antrieb bewirkt werden. Dabei können die einzelnen Bewegungen zum Teil miteinander überlagert werden, so dass in bestimmten Abschnitten der Überführung des Kupplungsarms zwischen Ruhestellung und Arbeitsstellung mehrere Bewegungen gleichzeitig ausgeführt werden.

Gemäß einer weiteren, besonders bevorzugten Ausgestaltung der Anhängekupplung kann vorgesehen sein, dass die Anhängekupplung einen Zahnstange-Ritzel-Trieb aufweist, wobei die Zahnstange und das Ritzel derart angeordnet sind, dass bei der Überführung des Kupplungsarms zwischen der Arbeitsstellung und der Ruhestellung eine Translation des Drehlagerteils zum abschnittsweisen Eingriff zwischen Zahnstange und Ritzel führt und eine Rotation des Kupplungsarms bewirkt. Alternativ zu Zahnstange und Ritzel können auch andere Kombinationen unter Ausbildung eines entsprechenden Triebs verwendet werden. Beispielsweise könnten auch eine Reibstange und ein Reibrad zum Einsatz kommen.

Um den abschnittsweisen Eingriff und die während des Eingriffs stattfindende Rotation des Kupplungsarms zu ermöglichen, kann beispielsweise vorgesehen sein, dass die Zahnstange an dem Gehäuseteil, bevorzugt an einer Innenseite einer Seitenwand des Gehäuseteils, und das Ritzel an dem Kupplungsarm, insbesondere an einem von einem Kupplungskopf abgewandten Ende, derart angeordnet ist, dass bei der Überführung des Kupplungsarms zwischen der Arbeitsstellung und der Ruhestellung über eine Translation des Drehlagerteils zumindest abschnittsweise ein Eingriff zwischen der Zahnstange und dem Ritzel herbeigeführt wird, und zu einer Rotation des Kupplungsarms führt. Besonders bevorzugt kann dabei vorgesehen sein, dass das Ritzel als Stirnradsegment ausgeführt ist, welches an dem Kupplungsarm angeordnet und/oder mit dem Kupplungsarm verbunden ist.

Eine weitere, vorteilhafte Ausgestaltung der Anhängekupplung sieht vor, dass bei der Überführung des Kupplungsarms zwischen der Arbeitsstellung und der Ruhestellung ein erster Antrieb eine Translation und eine Verkippung des Drehlagerteils des Kupplungsarms und ein zumindest zweiter Antrieb eine Rotation des Kupplungsarms bewirkt. Eine Ausgestaltung der Anhängekupplung mit zumindest zwei Antrieben hat den Vorteil, dass die jeweiligen Bewegungen oder Teilbewegungen des Kupplungsarms entkoppelt und dementsprechend voneinander unabhängig oder zumindest teilweise voneinander unabhängig ausgeführt werden können.

Weitere Vorteile und Einzelheiten der erfindungsgemäßen Anhängekupplung werden nachfolgend unter Zuhilfenahme der beigefügten, schematisierten Zeichnungen erläutert werden, welche Ausführungsbeispiele der Anhängekupplung zeigen. Im Einzelnen zeigen die Figuren:
- Fig. 1: eine Explosionszeichnung einer erfindungsgemäßen Anhängekupplung gemäß einer ersten Ausführungsform;
- Fig. 2: eine Explosionszeichnung einer erfindungsgemäßen Anhängekupplung gemäß einer zweiten Ausführungsform;
- Fig. 3a bis 3j: eine Überführung eines Kupplungsarms einer Anhängekupplung gemäß der ersten Ausführungsform aus der Ruhestellung in die Arbeitsstellung;
- Fig. 4: ein Arretierelement einer erfindungsgemäßen Anhängekupplung;
- Fig. 5a bis 5j: eine Überführung eines Kupplungsarms einer Anhängekupplung gemäß der zweiten Ausführungsform aus der Ruhestellung in die Arbeitsstellung.

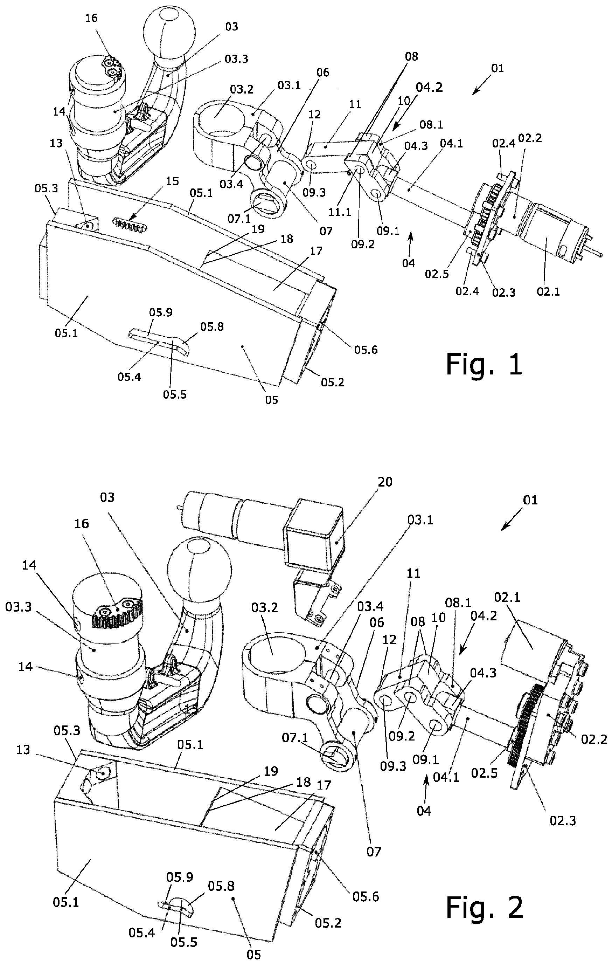

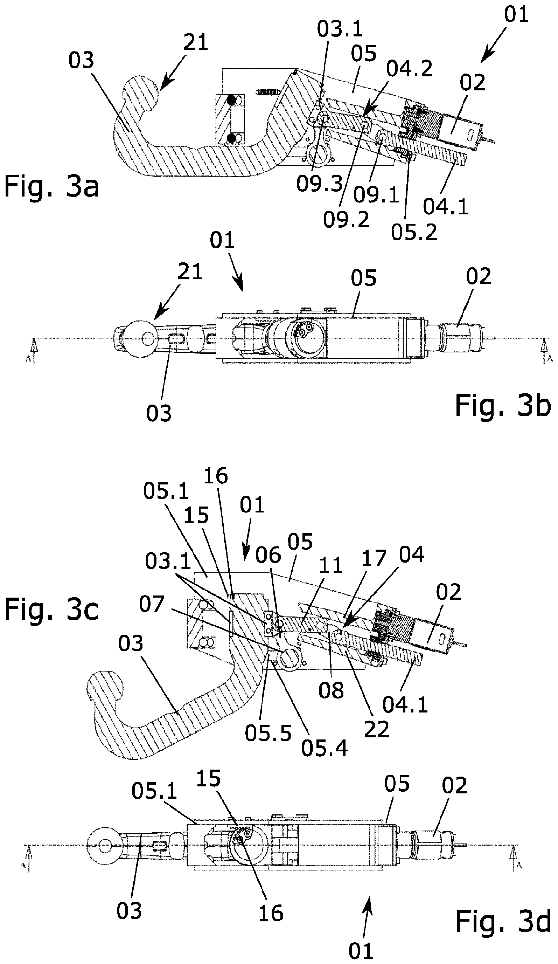

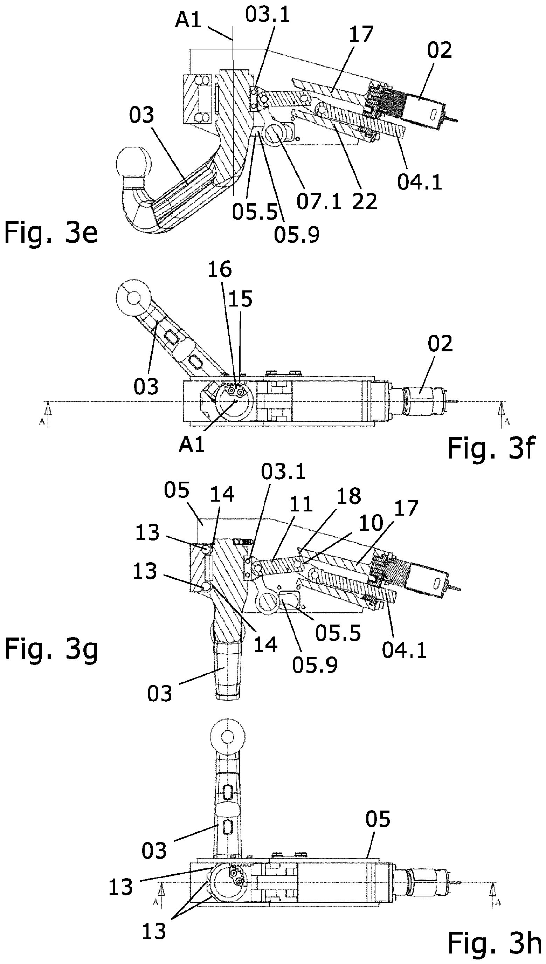

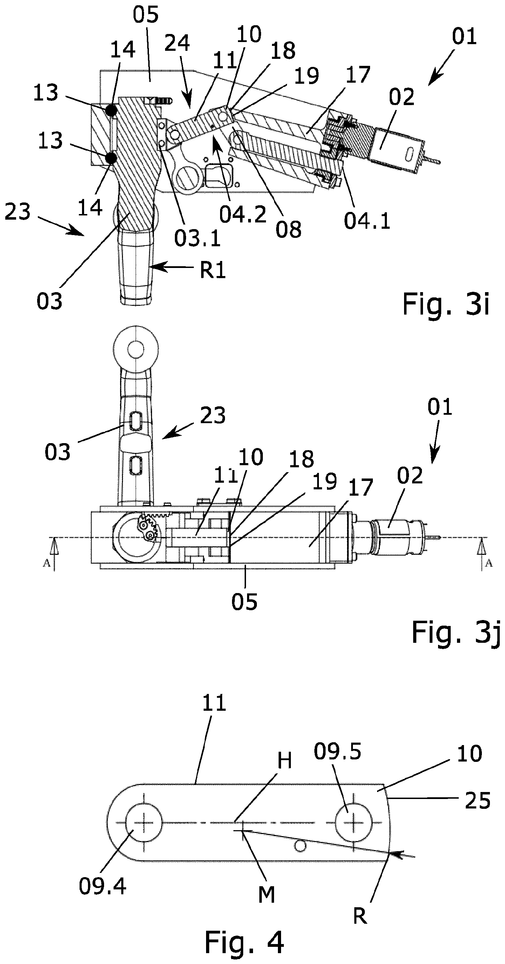

Im Anhang der Fig. 1 und 2 sollen zunächst die jeweiligen Bestandteile oder Elemente der erfindungsgemäßen Anhängekupplungen in zwei unterschiedlichen Ausführungsformen näher beschrieben werden. Die funktionellen Aufgaben und Zusammenhänge der in den Fig. 1 und 2 gezeigten Elemente der Anhängekupplungen werden im Anschluss daran mit Bezug auf die Fig. 3 bis 5 näher erläutert.

Die Fig. 1 zeigt eine Explosionszeichnung einer erfindungsgemäßen Anhängekupplung 01 gemäß einer ersten Ausführungsform. Die erste Ausführungsform der Anhängekupplung 01 zeichnet sich dabei dadurch aus, dass ein einziger Antrieb 02 zur Überführung des Kupplungsarms 03 zwischen der Arbeitsstellung und der Ruhestellung des Kupplungsarms 03 vorgesehen ist. Die Anhängekupplung 01 umfasst neben dem Kupplungsarm 03 eine Stellmechanik 04 und ein Gehäuseteil 05.

Der Kupplungsarm 03 umfasst zudem ein Drehlagerteil 03.1, welches fest mit einem Kipparm 06 verbunden ist, der wiederum mit einer Achse 07 verbunden ist, die auf beiden Seiten Achsvorsprünge 07.1 aufweist, wobei in der Darstellung der Fig. 1 nur einer der Achsvorsprünge 07.1 zu sehen ist. Das Drehlagerteil 03.1 umfasst eine Lagerfläche 03.2, die einen Aufnahmeabschnitt 03.3 des Kupplungskopfes 03 drehbar lagert.

Die Stellmechanik 04 weist eine Gewindespindel 04.1 sowie ein Dreifachgelenk 04.2 auf. Das Dreifachgelenk 04.2 umfasst ein Paar von Antriebshebeln 08, welche über ein erstes Gelenk 09.1 mit einem Kopf 04.3 der Gewindespindel 04.1 drehbar verbunden sind. Das Paar von Antriebshebeln 08 ist über ein zweites Gelenk 09.2 drehbar mit einem zweiten Ende 10 eines Arretierelements 11 verbunden. Ein erstes Ende 12 des Arretierelements 11 umfasst eine weitere Gelenkaufnahme 09.4, welche zusammen mit einem Bolzen 03.4 des Drehlagerteils 03.1 ein drittes Gelenk 09.3 mit dem Drehlagerteil 03.1 des Kupplungsarms 03 ausbildet. Der Antrieb 02 umfasst neben einem Motor 02.1 ein Getriebe 02.2 und einen Lagerdeckel 02.3 mit entsprechenden Befestigungsmitteln 02.4 zur Befestigung des Antriebs 02 an dem Gehäuseteil 05. Außerdem umfasst der Antrieb 02 eine Spindelmutter 02.5, mit welcher die Gewindespindel 04.1 angetrieben wird.

Das Gehäuseteil 05 weist zwei Seitenwände 05.1 auf, welche an einer ersten Stirnseite 05.2 und einer zweiten Stirnseite 05.3 miteinander verbunden sind. Die Seitenwände 05.1 des Gehäuseteils 05 weisen darüber hinaus Kulissenöffnungen 05.4 auf, die eine Kulisse 05.5 ausbilden. Die Kulisse 05.5 umfasst einen Rotationsabschnitt 05.8 und einen Translationsabschnitt 05.9. An der ersten Stirnseite 05.2 des Gehäuseteils 05 sind Einrichtungen 05.6 zur zumindest teilweisen Aufnahme des Antriebs 02 vorgesehen. An der zweiten Stirnseite 05.3 des Gehäuseteils 05 sind Drehsicherungselemente 13 angeordnet, welche mit komplementär ausgestalteten Drehsicherungselementen 14 des Kupplungsarms 03 in Eingriff bringbar sind. Im Beispiel der Fig. 1 sind die Drehsicherungselemente 13, 14 als KugelKalotten-Kombination ausgebildet.

Auf der Innenseite 05.7 einer Seitenwand 05.1 des Gehäuseteils 05 ist zudem eine Zahnstange 15 angeordnet, welche zusammen mit dem am Kupplungsarm 03 vorgesehenen Ritzel 16 einen Zahnstangen-Ritzel-Trieb ausbildet. Im Inneren des Gehäuseteils 05 ist zudem ein erstes Führungsmittel 17 angeordnet, welches an einem Ende 18, welches von dem Antrieb 02 abgewandt ist, einen Stützanschlag 19 für das Arretierelement 11 ausbildet. In dem Gehäuseteil 05 ist zudem ein zweites Führungsmittel 20 angeordnet, welches in der perspektivischen Darstellung der Fig. 1 jedoch nicht erkennbar ist. Das zweite Führungsmittel 22 verläuft im Wesentlichen parallel zum ersten Führungsmittel 17.

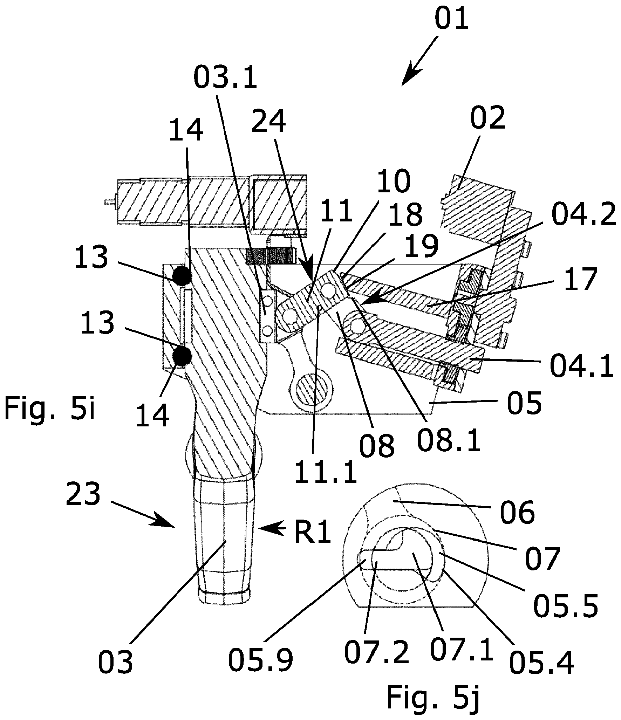

Das Arretierelement 11 umfasst weiter ein Anschlagmittel 11.1. Das Anschlagmittel 11.1 ist als Stift ausgeführt, der auf beiden Seiten des Arretierelements 11 übersteht und den Winkel begrenzt, den das Arretierelement 11 und das Paar von Antriebshebeln 08 zueinander einnehmen können. Außerdem weisen die Antriebshebel 08 auf ihren dem Führungsmittel 17 zugewandten Kanten eine Profilierung 08.1 auf. Die Profilierung 08.1 und das Anschlagmittel 11.1 dienen zum sicheren und einfachen Erreichen der Arretierstellung des Arretierelements oder zum Halten des Kupplungsarms in der Arbeitsstellung durch das Arretierelement. Auf die Profilierung 08.1 und das Anschlagmittel 11.1 wird in der Beschreibung der Fig. 5i noch genauer eingegangen.

Die Anhängekupplung der Fig. 2 entspricht in weiten Teilen der Ausführungsform der Fig. 1. Dementsprechend sind Teile, die eine entsprechende technische Wirkung entfalten mit entsprechend gleichen Bezugszeichen versehen wie die entsprechenden Teile der Anhängekupplung gemäß der ersten Ausführungsform der Fig. 1.

Die Ausführungsform der Fig. 2 unterscheidet sich von der Ausführungsform der Fig. 1 einerseits durch die Ausführung des Antriebs 02. Darüber hinaus unterscheidet sich die Ausführungsform der Fig. 2 von der Ausführungsform der Fig. 1 darin, dass die Anhängekupplung 01 einen zweiten Antrieb 20 aufweist, der bei der Überführung des Kupplungsarms 03 zwischen der Arbeitsstellung und der Ruhestellung eine Rotation des Kupplungsarms 03 um eine Rotationsachse A1 bewirkt. Dazu sieht der zweite Antrieb 20 einen in der Darstellung der Fig. 2 nicht dargestellten Abtrieb vor, der mit dem an dem Kupplungsarm 03 angeordneten Ritzel 16 in Eingriff steht, wodurch über den zweiten Antrieb 20 bei einer Befestigung des Antriebs 20 an dem Drehlagerteil 03.1 über eine Halterung 28 eine Betätigung des zweiten Antriebs 20 dazu führt, dass der Kupplungsarm 03 um die Rotationsachse A1 rotiert wird. Da die Rotation des Kupplungsarms 03 durch den zweiten Antrieb 20 bewerkstelligt wird, benötigt die Anhängekupplung 01 gemäß der Ausführungsform der Fig. 2 keine Zahnstange 15, wie sie in der Ausführungsform der Fig. 1 benötigt wird.

Außerdem unterscheiden sich die Ausführungsformen in der Form der Kulissen 05.5 und/oder der Kulissenöffnungen 05.4, wobei die Funktion oder Funktionen der Kulissen 05.5 identisch sind. Auch weisen die Kulissen 05.5 beide gleichermaßen einen Translationsabschnitt 05.9 und einen Rotationsabschnitt 05.8 auf. Die unterschiedliche Form der Kulissen ist den unterschiedlichen Antriebskonzepten mit genau einem Antrieb 02 (Fig. 1) und zwei Antrieben 02, 20 (Fig. 2) und der Tatsache geschuldet, dass bei der Ausführungsform der Fig. 1 eine Rotation des Kupplungsarms 03 gegenüber der Anhängekupplung und gegenüber dem Drehlagerteil 03.1 mittelbar durch eine Translation des Drehlagerteils 03.1 erwirkt werden muss. Deshalb fällt bei der Ausführungsform der Fig. 1 der Translationsabschnitt 05.9 der Kulisse 05.5 entsprechend länger aus als bei der Ausführungsform der Fig. 2.

Die Fig. 3a und 3b zeigen eine Anhängekupplung 01 mit einem Kupplungsarm 03, welcher sich in der Ruhestellung 21 befindet. Die Fig. 3a zeigt dabei einen Schnitt durch die Anhängekupplung 01 entlang des in der Fig. 3b dargestellten Ebene A-A. In der Ruhestellung 21 des Kupplungsarms 03, wie er in den Fig. 3a und 3b dargestellt ist, hat der Antrieb 02 die Gewindespindel 04.1 maximal aus der ersten Stirnseite 05.2 des Gehäuseteils 05 herausbewegt oder herausgezogen. Dies führt dazu, dass das Dreifachgelenk 04.2 zwischen dem Drehlagerteil 03.1 und der Gewindespindel 04.1 maximal gestreckt ist, wobei, wie insbesondere in der Darstellung der Fig. 3a erkennbar, eine vollständige Streckung des Dreifachgelenks 04.2 unterbleibt und damit sichergestellt wird, dass das Dreifachgelenk 04.2 nicht in eine Totpunktstellung gerät, in der eine Abwinklung über die Gelenke 09.1 bis 09.3 erschwert oder verhindert wird.

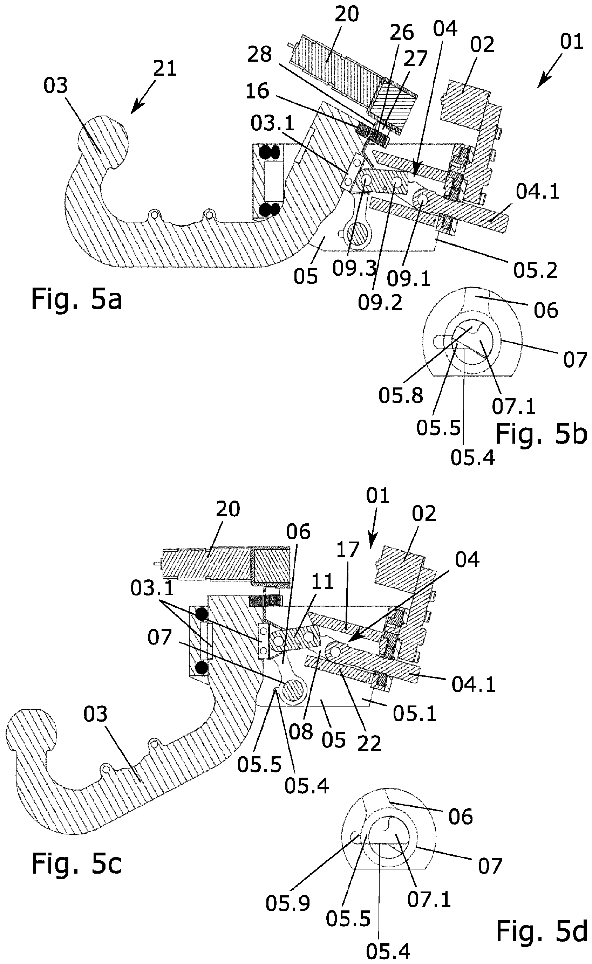

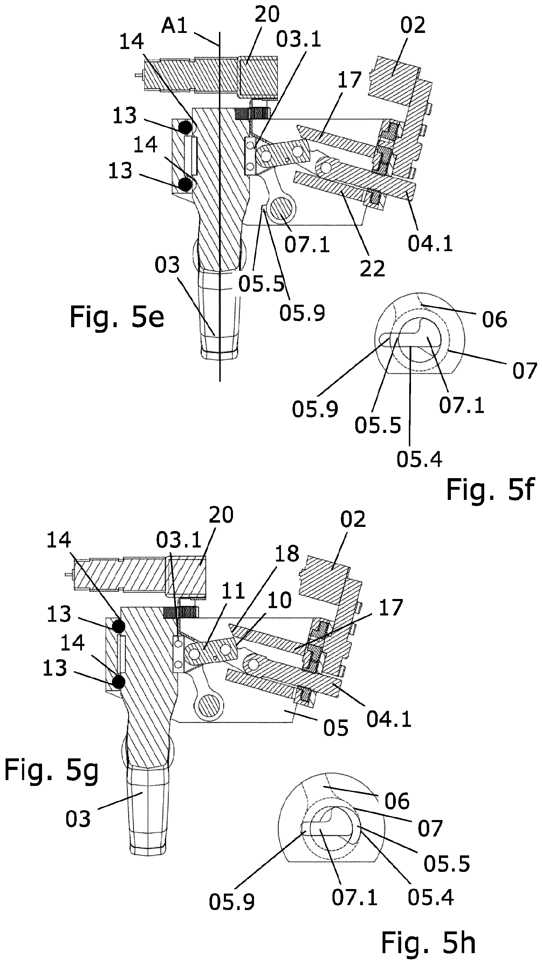

Die Fig. 3c und 3d zeigen die Anhängekupplung 01 in einem Zwischenstadium, also mit dem Kupplungsarm 03 in einer Zwischenstellung zwischen der Ruhestellung und der Arbeitsstellung. Wie auch schon beim Figurenpaar 3a und 3b stellt die Fig. 3c einen Schnitt durch die Anhängekupplung 01 entlang der in der Fig. 3d dargestellten Ebene A-A dar. In den Fig. 3c und 3d ist die Gewindespindel 04.1 über den Antrieb 02 bereits ein Stück weit in das Innere des Gehäuseteils 05 bewegt worden. Die Winkelstellung zwischen der Gewindespindel 04.1, den Antriebshebeln 08 und dem Arretierelement 11 werden über das erste Führungsmittel 17 und das zweite Führungsmittel 22 bestimmt. Die Einzelheiten in Bezug auf die Kulissenöffnungen 05.4 der Kulisse 05.5 werden noch detaillierter mit Bezug auf die Fig. 5 beschrieben. Was jedoch in der Darstellung in den Fig. 3c und 3d beim Vergleich mit den Fig. 3a und 3b deutlich wird ist, dass die über den Antrieb 02 bewirkte Verstellung der Gewindespindel 04.1 und damit eine Bewegung der Stellmechanik 04 eine Verkippung des Drehlagerteils 03.1 hervorgerufen hat, wodurch ebenfalls eine Verkippung des Kupplungsarms 03 herbeigeführt wurde. Die Verkippung erfolgte dabei über den Kipparm 06 und insbesondere um die Achse 07. In der Draufsicht der Fig. 3d ist zudem erkennbar, dass in der besagten Zwischenstellung das als Stirnradsegment ausgeführte Ritzel 16 des Kupplungsarms 03 mit der Zahnstange 15 in Eingriff gebracht ist, welche sich auf der Innenseite der Seitenwand 05.1 des Gehäuseteils 05 befindet.

Entsprechend den Paaren von Fig. 3c und 3d stellt auch das Figurenpaar 3e und 3f eine Darstellung der Anhängekupplung 01 gemäß der ersten Ausführungsform dar, in der der Kupplungsarm 03 eine Zwischenstellung zwischen der Ruhestellung und der Arbeitsstellung einnimmt. Fig. 3e ist abermals ein Schnitt durch die Anhängekupplung 01 entlang der in der Fig. 3f dargestellten Ebene A-A.

In der Position der Fig. 3e und 3f ist die Gewindespindel 04.1 mittels des Antriebs 02 gegenüber der Position der Fig. 3c und 3d abermals ein weiteres Stück in das Gehäuseteil 05 bewegt worden. Durch die Kulisse 05.5 und die entsprechenden Achsenvorsprünge 07.1 sowie über die Führungsmittel 17 und 22 wird die Linearbewegung der Gewindespindel 04.1 in eine Linearbewegung des Drehlagerteils 03.1 übersetzt, wobei die lineare Translation parallel zum entsprechenden Verlauf des Translationsabschnitts 05.9 der Kulisse 05.5 verläuft. Die entsprechende Linearbewegung oder Translationsbewegung des Drehlagerteils 03.1 führt jedoch gleichzeitig dazu, dass das an dem Kupplungsarm 03 geordnete Ritzel 16 an der Zahnstange 15 vorbeigeführt wird, wobei das Ritzel 16 in die Zahnstange 15 eingreift. Dadurch wird zusätzlich zu der Translationsbewegung des Drehlagerteils 03.1 eine Rotation des Kupplungsarms 03 um die Achse A1 hervorgerufen.

Auch die Fig. 3g und 3h zeigen die erfindungsgemäße Anhängekupplung 01 in einer grundsätzlich analogen Darstellungsweise zu den vorangehenden Figurenpaaren, wobei der Kupplungsarm 03 in den Darstellungen der Fig. 3g und 3h kurz vor der Erreichung der Arbeitsstellung steht. Dies bedeutet mit anderen Worten ausgedrückt, dass die Gewindespindel 04.1 nochmals weiter in das Gehäuseteil 05 bewegt wurde, dass dadurch das Drehlagerteil 03.1 des Kupplungsarms weiter parallel zum entsprechenden Translationsabschnitt 05.9 der Kulisse 05.5 verschoben wurde, dass über den Zahnstangen-Ritzel-Trieb die Rotation des Kupplungsarms 03 um das Drehlagerteil 03.1 abgeschlossen wurde und die komplementär zueinander ausgestalteten Drehsicherungselemente 13 und 14 kurz davor stehen, miteinander in Eingriff gebracht zu werden. Außerdem ist erkennbar, dass das zweite Ende 10 des Arretierelements 11 kurz davor steht, das Ende 18 des ersten Führungsmittels 17 zu erreichen.

In dem Figurenpaar 3i und 3j, welches in der Art seiner Darstellung den vorangegangenen Figurenpaaren entspricht, hat der Kupplungsarm 03 der Anhängekupplung 01 die Arbeitsstellung 23 eingenommen. Dazu wurde die Gewindespindel 04.1 über den Antrieb 02 soweit in das Innere des Gehäuseteils 05 bewegt, dass das Arretierelement 11 von den Antriebshebeln 08 gegenüber dem Drehlagerteil 03.1 verkippt wurde und das zweite Ende 10 des Arretierelements 11 nunmehr einen Reibschluss mit einem am Ende 18 des ersten Führungsmittels 17 ausgebildeten Stützanschlag 19 ausbildet. Die Verkippung des Arretierelements 11 wurde, neben der entsprechenden Dimensionierung des ersten Führungsmittels 17 und des Stützanschlags 19, durch die Antriebshebel 08 bewirkt, so dass das Arretierelement 11 aus der in den Fig. 3a bis 3h dargestellten Freigabestellung oder Freigabestellungen in die in der Fig. 3i dargestellten Arretierstellung 24 überführt werden konnte. In der Arretierstellung 24 des Arretierelements 11 und damit auch in der Arbeitsstellung 23 des Kupplungsarms 03 ist das Dreifachgelenk 04.2 unter Einbeziehung des Arretierelements 11 sowie der Antriebshebel 08 maximal abgewinkelt.

Durch das Erreichen der Arretierstellung 24 des Arretierelements 11 wurden außerdem die Drehsicherungselemente 13 und 14 miteinander in Eingriff gebracht und miteinander in Eingriff gehalten. Dadurch wird eine Rotation des Kupplungsarms 03 gegenüber dem Drehlagerteil 03.1 und gegenüber dem Gehäuseteil 05 verhindert. Durch eine vergleichbar kleine Kraft der Antriebshebel 08 auf das zweite Ende 10 des Arretierelements 11 kann der Haftschluss zwischen dem zweiten Ende 10 des Arretierelements 11 und dem Stützanschlag 19 ausgebildet werden.

Wie in der Fig. 3i erkennbar, führt die Anordnung des Arretierelements 11 in der Arretierstellung 24 dazu, dass bei einer Krafteinwirkung auf den Kupplungsarm 03, beispielsweise eine Krafteinwirkung in der Richtung R1, dazu führt, dass die entsprechenden Gegenkräfte von dem Drehlagerteil 03.1 auf das Arretierelement 11 und über den Stützanschlag 19 und das erste Führungsmittel 17 in das Gehäuseteil 05 der Anhängekupplung 01 abgeleitet werden, ohne dass eine Krafteinleitung in den Antrieb 02 erfolgt. Damit kann sichergestellt werden, dass der Kupplungsarm 03 derart in der Arbeitsstellung 23 gehalten wird, dass ein Nachtakten des Antriebs 02 und ein Nachstellen der Stellmechanik 04 unterbleiben kann oder zumindest seltener notwendig wird, da die Krafteinwirkungen auf den Kupplungsarm 03 zu einer reduzierten Krafteinleitung in den Antrieb 02 führen oder sogar den Antrieb 02 gänzlich kraftfrei halten.

Die Fig. 4 zeigt ein Arretierelement 11, welches, neben einer ersten Gelenkaufnahme 09.4 und einer zweiten Gelenkaufnahme 09.5 an dem zweiten Ende 10 eine asymmetrische Form 25, insbesondere eine asymmetrische Abrundung aufweist. Die asymmetrische Form 25 wird durch einen Kreisbogen mit dem Radius R gebildet, wobei der zu dem Kreisbogen gehörige Kreismittelpunkt M exzentrisch außerhalb der Hebelachse H des Arretierelements 11 angeordnet ist. Durch die asymmetrische Rundung 25 wird einerseits die Verspannkraft beim Einnehmen der Arretierstellung 24 des Arretierelements 11 erhöht. Andererseits kann die asymmetrische Form 25 als Toleranzausgleich und als Verschleißausgleich dienen. Schließlich führt die asymmetrische Form 25 auch dazu, dass die Arretierstellung 24 des Arretierelements 11 selbsthemmend ausgeführt ist und über die Stellmechanik 04 leicht erreicht und wieder aufgehoben werden kann.

Die Fig. 5a, 5c, 5e, 5g und 5i zeigen Schnitte durch erfindungsgemäße Anhängekupplungen gemäß der zweiten Ausführungsform, wie sie in der Darstellung in der Fig. 2 gezeigt ist. Die in den Schnitten dargestellte Überführung des Kupplungsarms 03 aus der Ruhestellung 21 gemäß der Fig. 5a in die Arbeitsstellung 23 gemäß der Fig. 5i erfolgt weitestgehend parallel zu den entsprechenden Vorgängen, wie sie mit Bezug auf die Fig. 3a bis 3j beschrieben wurden. Dementsprechend kann auf die Ausführungen zu den Fig. 3 verwiesen werden.

Außerdem soll an dieser Stelle noch auf die Fig. 5i eingegangen werden, in der die Wirkung des Anschlagmittels 11.1 des Arretierelements und der Profilierung 08.1 der Antriebshebel 08 erkennbar sind. Die Profilierung 08.1 der dem Führungsmittel 17 zugewandten Kanten der Antriebshebel 08 dient dazu, dass das Arretierelement 11 in der Arretierstellung 24 sicher an dem Stützanschlag 19 zu Anlage kommt und dient weiter dazu, dass nur das Arretierelement 11 an dem Stützanschlag 19 zur Anlage kommt. Dies bedeutet, dass gerade kein Reibschluss zwischen den Antriebshebeln 08 und dem Stützanschlag 19 erreicht wird. Dies ermöglicht unter anderem die leichte Aufhebung der Arretierstellung 24 des Arretierelements 11. Das Anschlagmittel 11.1 sorgt für eine Begrenzung der Abwinklung zwischen dem Arretierelement 11 und den Antriebshebeln 08, da beim oder kurz nach dem Erreichen der Arretierstellung 24 des Arretierelements 11 die der Profilierung 08.1 gegenüberliegenden Kanten der Antriebshebel 08 an dem Anschlagmittel 11.1, also an dem seitlich über das Arretierelement 11 überstehenden Stift, zur Anlage kommen und somit eine weitere Rotation des zweiten Gelenks 09.2 blockieren. Das Anschlagmittel 11.1 und die Profilierung 08.1 dienen in der Ausführungsform der Fig. 1 und 3 demselben Zweck, was beispielsweise in der Darstellung der Fig. 3i erkennbar ist.

Ein wesentlicher Unterschied besteht jedoch in der Rotation des Kupplungsarms 03 um das Drehlagerteil 03.1, welcher zwischen der Darstellung der Fig. 5c und der Darstellung der Fig. 5e erfolgt. Die Rotation des Kupplungsarms 03 wird unabhängig von der Translationsbewegung und der Kippbewegung des Kupplungsarms 03 ausgeführt und durch den zweiten Antrieb 20 bewirkt, welcher über die Halterung 28 fest mit dem Drehlagerteil 03.1 verbunden ist. In der Fig. 5e ist dementsprechend zu erkennen, dass ein von einer Welle 27 des zweiten Antriebs 20 angetriebener Abtrieb 26, beispielsweise in Form eines Zahnrads mit dem als Stirnradsegment ausgeführten Ritzel 16 des Kupplungsarms 03 im Eingriff steht, so dass eine Ansteuerung des zweiten Antriebs 20 zu einer Rotation des Kupplungsarms 03 um das Drehlagerteil 03.1 führt, soweit die Drehsicherungselemente 13 und 14 nicht miteinander im Eingriff stehen und eine entsprechende Rotation unterbinden. Durch das Vorsehen des zweiten Antriebs 20 kann die Rotation des Kupplungsarms 03 von anderen Bewegungen bei der Überführung des Kupplungsarms 03 zwischen der Ruhestellung und der Arbeitsstellung entkoppelt und/oder unabhängig ausgeführt werden. Dadurch können die Bewegungen optimal aufeinander abgestimmt werden.

Im Weiteren soll auf die Führung der Achse 07 durch die Achsenvorsprünge 07.1 und die Kulisse 05.5 eingegangen werden. Dazu wird auf die Darstellungen der Fig. 5b, 5d, 5h und 5j verwiesen. Darin sind der Kipparm 06 und die Achse 07 strichliniert dargestellt, wohingegen die Kulissenöffnung 05.4 der Kulisse 05.5 und der Achsenvorsprung 07.1 mit durchgezogenen Linien dargestellt sind.

In der Ruhestellung 21 des Kupplungsarms 03, wie sie in der Fig. 5a dargestellt ist, befindet sich der Achsvorsprung 07.1 in einem Rotationsabschnitt 05.8 der Kulisse 05.5, wie sie in der Darstellung der Fig. 5b gezeigt ist. Dadurch, dass sich der in etwa hakenförmig ausgebildete Achsvorsprung 07.1 im Rotationsabschnitt 05.8 der Kulisse 05.5 befindet, wird eine Rotation des Kipparms 06 über eine Rotation der Achse 07 erreicht, wenn von dem ersten Antrieb 02 (Fig. 5a) eine Kraft auf die Stellmechanik 04 ausgeübt wird, durch die die Gewindespindel 04.1 in das Gehäuseteil 05 bewegt wird. Die Kulissenöffnung 05.4 der Kulisse 05.5 ist dabei jedoch so ausgestaltet, dass eine Rotation der Achse 07 wieder unterbunden wird, wenn der Kipparm 06 und damit auch das Drehlagerteil 03.1 die Position eingenommen haben, wie sie beispielsweise in den Fig. 5c und 5d dargestellt sind.

Außerdem umfasst die Kulisse 05.5 ein Translationsabschnitt 05.9, der bezüglich des Achsvorsprungs 07.1 derart ausgestaltet ist, dass bei der weiteren Überführung des Kupplungsarms 03 aus der Arbeitsstellung 23 in die Ruhestellung 21 oder umgekehrt, eine Translation der Achse 07 entlang der Kulisse 05.5 erfolgt und über den Kipparm 06 dementsprechend auch eine Translation des Drehlagerteils 03.1 und des Kupplungsarms 03 bewirkt wird. Die Translationsbewegungen werden beispielsweise zwischen den Darstellungen der Fig. 5e und 5g bzw. 5f und 5h ausgeführt. Wie man anhand der Fig. 5g weiter erkennen kann, ist die Kulisse 05.5 derart ausgestaltet, dass in der Arbeitsstellung 23 des Kupplungsarms 03, wie er beispielsweise in der Fig. 5i dargestellt ist, eine Rotation der Achse 07 verhindert wird. Dies wird durch das Eingreifen des Barts 07.2 des Achsenvorsprungs 07.1 in den Translationsabschnitt 05.9 der Kulisse 05.5 erreicht. Abgesehen von einer etwas anderen Dimensionierung ist die Kulisse 05.5 der ersten Ausführungsform der Anhängekupplung 01 gleichgeformt wie die Kulisse 05.5 der zweiten Ausführungsform der Fig. 5. Auch die entsprechenden Achsvorsprünge 07.1 können leicht unterschiedlich ausgebildet sein, was beispielsweise beim Vergleich der Fig. 1 und 2 augenscheinlich wird.

### Bezugszeichen:

- 01: Anhängekupplung
- 02: Antrieb
- 02.1: Motor
- 02.2: Getriebe
- 02.3: Lagerdeckel
- 02.4: Befestigungsmittel
- 02.5: Spinedelmutter
- 03: Kupplungsarm
- 03.1: Drehlagerteil
- 03.2: Lagerfläche
- 03.3: Aufnahmeabschnitt
- 03.4: Bolzen
- 04: Stellmechanik
- 04.1: Gewindespindel
- 04.2: Dreifachgelenk
- 04.3: Kopf
- 05: Gehäuseteil
- 05.1: Seitenwand
- 05.2: erste Stirnseite
- 05.3: zweite Stirnseite
- 05.4: Kulissenöffnung
- 05.5: Kulisse
- 05.6: Einrichtung
- 05.7: Innenseite
- 05.8: Rotationsabschnitt
- 05.9: Translationsabschnitt
- 06: Kipparm
- 07: Achse
- 07.1: Achsvorsprung
- 07.2: Bart
- 08: Antriebshebel
- 08.1: Profilierung
- 09.1: erstes Gelenk
- 09.2: zweites Gelenk
- 09.3: drittes Gelenk
- 09.4: erste Gelenkaufnahme
- 09.5: zweite Gelenkaufnahme
- 10: zweites Ende
- 11: Arretierelement
- 11.1: Anschlagmittel
- 12: erstes Ende
- 13: Drehsicherungselement
- 14: Drehsicherungselement
- 15: Zahnstange
- 16: Ritzel
- 17: erstes Führungsmittel
- 18: Ende
- 19: Stützanschlag
- 20: zweiter Antrieb
- 21: Ruhestellung
- 22: zweites Führungsmittel
- 23: Arbeitsstellung
- 24: Arretierstellung
- 25: asymmetrische Form
- 26: Abtrieb
- 27: Welle
- 28: Halterung
- A1: Rotationsachse
- A-A: Ebene
- A-A: Ebene
- H: Hebelachse
- M: Kreismittelpunkt
- R: Radius
- R1: Richtung

## Patentansprüche

1. Anhängekupplung für Fahrzeuge mit einem beweglichen Kupplungsarm (03), der mit zumindest einem Antrieb (02) zwischen einer Arbeitsstellung (23) und einer Ruhestellung (21) bewegbar ist, wobei ein Arretierelement (11) vorgesehen ist, welches den Kupplungsarm (03) derart in der Arbeitsstellung (23) hält, dass bei Krafteinwirkungen auf den Kupplungsarm (03) eine Krafteinleitung in zumindest einen Antrieb (02) zumindest reduziert wird,
**dadurch gekennzeichnet,**
**dass** das Arretierelement (11) als Teil einer von einem Antrieb (02) angetriebenen Stellmechanik (04) zur Überführung des Kupplungsarms (03) zwischen der Arbeitsstellung (23) und der Ruhestellung (21) ausgebildet ist, wobei das Arretierelement (11) an einem ersten Ende (12) über ein Gelenk (09.3) mit einem Drehlagerteil (03.1) des Kupplungsarms (03) verbunden ist, wobei das Arretierelement (11) über eine Verkippung gegenüber dem Drehlagerteil (03.1) zwischen der Arretierstellung (24) und einer Freigabestellung bewegbar ist, wobei das Arretierelement (11) in der Arretierstellung (24) an einem Stützanschlag (19) zu Anlage kommt.

2. Anhängekupplung nach Anspruch 1,
**dadurch gekennzeichnet,**
**dass** das Arretierelement (11) den Kupplungsarm (03) in der Arbeitsstellung (23) derart hält, dass bei Krafteinwirkungen auf den Kupplungsarm (03) in der Arbeitsstellung (23) zumindest ein Antrieb (02) kraftfrei gehalten wird.

3. Anhängekupplung nach einem der Ansprüche 1 oder 2,
**dadurch gekennzeichnet,**
**dass** das Arretierelement (11) in einer Freigabestellung zur Kraftübertragung zwischen einem Antrieb (02) und dem Kupplungsarm (03) eingerichtet ist.

4. Anhängekupplung nach einem der Ansprüche 1 bis 3,
**dadurch gekennzeichnet,**
**dass** das Arretierelement (11) zumindest eine Gelenkaufnahme (09.4, 09.5) aufweist.

5. Anhängekupplung nach einem der Ansprüche 1 bis 61,
**dadurch gekennzeichnet,**
**dass** das Arretierelement (11) in der Arretierstellung (24) mit einem zweiten Ende (10) des Arretierelements (11) an einem Stützanschlag (19) zu Anlage kommt.

6. Anhängekupplung nach einem der Ansprüche 1 bis 5,
**dadurch gekennzeichnet,**
**dass** das Arretierelement (11) an einem zweiten Ende (10) eine asymmetrische Form (25), insbesondere Abrundung, aufweist.

7. Anhängekupplung nach einem der Ansprüche 1 bis 6,
**dadurch gekennzeichnet,**
**dass** das Arretierelement (11) als ein Arm eines Dreifachgelenks (04.2) ausgebildet ist.

8. Anhängekupplung nach Anspruch 7,
**gekennzeichnet durch**
zumindest zwei Führungsmittel (17, 22), welche bei der Überführung des Kupplungsarms (03) zwischen Ruhestellung (21) und Arbeitsstellung (23) die Relativlage der Arme des Dreifachgelenks (04.2) zueinander begrenzen.

9. Anhängekupplung nach einem der Ansprüche 1 bis 8,
**dadurch gekennzeichnet,**
**dass** ein Drehlagerteil (03.1) des Kupplungsarms (03) starr mit einem Kipparm (06) verbunden ist.

10. Anhängekupplung nach Anspruch 9,
**dadurch gekennzeichnet,**
**dass** der Kipparm (06) an einem vom Drehlagerteil (03.1) abgewandten Ende starr mit einer Achse (07) verbunden ist, die, insbesondere über zumindest einen Achsvorsprung (07.1), in einer Kulisse (05.5) geführt wird.

11. Anhängekupplung nach einem der Ansprüche 1 bis 10,
**gekennzeichnet durch**
genau einen Antrieb (02) zur Überführung des Kupplungsarms (03) zwischen einer Arbeitsstellung (23) und einer Ruhestellung (21).

12. Anhängekupplung nach einem der Ansprüche 1 bis 10,
**dadurch gekennzeichnet,**
**dass** bei der Überführung des Kupplungsarms (03) zwischen der Arbeitsstellung (23) und der Ruhestellung (21) ein erster Antrieb (02), eine Translation und eine Verkippung des Drehlagerteils (03.1) bewirkt und ein zweiter Antrieb (20) eine Rotation des Kupplungsarms (03) bewirkt.

## Claims

1. Tow hitch for vehicles, having a movable coupling arm (03) which by way of at least one drive (02) is movable between an operating position (23) and a resting position (21), wherein a locking element (11) which holds the coupling arm (03) in the operating position (23) in such a manner that an introduction of force into at least one drive (02) is at least reduced when a force acts on the coupling arm (03) is provided, **characterized in that**
the locking element (11) is configured as part of an actuator mechanism (04) which for transferring the coupling arm (03) between the operating position (23) and the resting position (21) is driven by a drive (02), wherein the locking element (11) is connected at a first end (12) by way of an articulation (09.3) to a rotary bearing part (03.1) of the coupling arm (03), wherein the locking element (11) is movable between the locking position (24) and a release position, wherein the locking element (11) comes to rest on a supporting stop (19) in the locking position (24).

2. Tow hitch according to Claim 1,
**characterized in that**
the locking element (11) holds the coupling arm (03) in the operating position (23) in such a manner that at least one drive (02) is kept free of a force when a force acts on the coupling arm (03) in the operating position (23).

3. Tow hitch according to one of Claims 1 or 2, **characterized in that**
the locking element (11) in a releasing position is specified for transmitting force between a drive (02) and the coupling arm (03).

4. Tow hitch according to one of Claims 1 to 3, **characterized in that**
the locking element (11) has at least one articulation receptacle (09.4, 09.5).

5. Tow hitch according to one of Claims 1 to 4, **characterized in that**
the locking element (11) in the locking position (24), by way of a second end (10) of the locking element (11), comes to bear on a supporting detent (19).

6. Tow hitch according to one of Claims 1 to 5, **characterized in that**
the locking element (11) at a second end (10) has an asymmetrical shape (25), in particular a rounded feature.

7. Tow hitch according to one of Claims 1 to 6, **characterized in that**
the locking element (11) is configured as an arm of a triple articulation (04.2).

8. Tow hitch according to Claim 7,
**characterized by**
at least two guiding means (17, 22) which when transferring the coupling arm (03) between the resting position (21) and the operating position (23) delimit the relative position of the arms of the triple articulation (04.2).

9. Tow hitch according to one of Claims 1 to 8 **characterized in that**
a rotary bearing part (03.1) of the coupling arm (03) is rigidly connected to a tilting arm (06).

10. Tow hitch according to Claim 9,
**characterized in that**
the tilting arm (06) at an end which faces away from the rotary bearing part (03.1) is rigidly connected to an axle (07), in particular is guided by way of at least one axle protrusion (07.1) in a gate (05.5).

11. Tow hitch according to one of Claims 1 to 10, **characterized by**
precisely one drive (02) for transferring the coupling arm (03) between an operating position (23) and a resting position (21).

12. Tow hitch according to one of Claims 1 to 10, **characterized in that**
when transferring the coupling arm (03) between the operating position (23) and the resting position (21), a first drive (02) causes translating and tilting of the rotary bearing part (03.1), and a second drive (20) causes rotating of the coupling arm (03).

## Revendications

1. Attelage de remorque de véhicules, ledit attelage comprenant un bras d'attelage mobile (03) qui peut être déplacé entre une position de travail (23) et une position de repos (21) à l'aide d'au moins un entraînement (02), un élément de blocage (11) étant prévu qui maintient le bras d'attelage (03) dans la position de travail (23) de façon à réduire au moins l'application de forces sur au moins un entraînement (02) lorsque des forces sont exercées sur le bras d'attelage (03),
**caractérisé en ce que**
l'élément de blocage (11) est conçu comme une partie d'un mécanisme de réglage (04) entraîné par un entraînement (02) et destiné à transférer le bras d'attelage (03) entre la position de travail (23) et la position de repos (21), l'élément de blocage (11) est relié, à une première extrémité (12), à une partie de palier rotatif (03.1) du bras d'attelage (03) par le biais d'une articulation (09.3), l'élément de blocage (11) est déplacé entre la position de blocage (24) et une position de libération par basculement par rapport à la partie de palier rotatif (03.1), l'élément de blocage (11) vient en contact avec une butée d'appui (19) dans la position de blocage (24).

2. Attelage de remorque selon la revendication 1,
**caractérisé en ce que**
l'élément de blocage (11) maintient le bras d'attelage (03) dans la position de travail (23) de façon à maintenir sans force au moins un entraînement (02) lorsque des forces sont exercées sur le bras d'attelage (03).

3. Attelage de remorque selon l'une des revendications 1 et 2,
**caractérisé en ce que**
l'élément de blocage (11) est placé dans une position de libération pour transmettre des forces entre un entraînement (02) et le bras d'attelage (03).

4. Attelage de remorque selon l'une des revendications 1 à 3,
**caractérisé en ce que**
l'élément de blocage (11) comporte au moins un logement d'articulation (09.4, 09.5).

5. Attelage de remorque selon l'une des revendications 1 à 4,
**caractérisé en ce que**
l'élément de blocage (11) vient en contact avec une butée d'appui (19) dans la position de blocage (24), avec une deuxième extrémité (10) de l'élément de blocage (11).

6. Attelage de remorque selon l'une des revendications 1 à 5,
**caractérisé en ce que**
l'élément de blocage (11) présente une forme asymétrique (25), notamment un arrondi, à une deuxième extrémité (10).

7. Attelage de remorque selon l'une des revendications 1 à 6,
**caractérisé en ce que**
l'élément de blocage (11) est conçu comme un bras d'une triple articulation (04.2).

8. Attelage de remorque selon la revendication 7,
**caractérisé par**
au moins deux moyens de guidage (17, 22) qui limitent la position relative des bras de la triple articulation (04.2) les uns par rapport aux autres lorsque le bras d'attelage (03) est transféré entre la position de repos (21) et la position de travail (23).

9. Attelage de remorque selon l'une des revendications 1 à 8,
**caractérisé en ce que**
une partie de palier rotatif (03.1) du bras d'attelage (03) est reliée rigidement à un bras basculant (06).

10. Attelage de remorque selon la revendication 9,
**caractérisé en ce que**
le bras basculant (06) est relié rigidement, à une extrémité opposée à la partie de palier rotatif (03.1), à un axe (07) qui est guidé dans une coulisse (05.5), notamment par le biais d'au moins une saillie d'axe (07.1).

11. Attelage de remorque selon l'une des revendications 1 à 10,
**caractérisé par**
exactement un entraînement (02) destiné à transférer le bras d'attelage (03) entre une position de travail (23) et une position de repos (21).

12. Attelage de remorque selon l'une des revendications 1 à 10,
**caractérisé en ce que**
lorsque le bras d'accouplement (03) est transféré entre la position de travail (23) et la position de repos (21), un premier entraînement (02) cause la translation et le basculement de la partie de palier rotatif (03.1) et un deuxième entraînement (20) cause la rotation du bras d'accouplement (03).
